# FASCICULE DE BREVET EUROPEEN

(11) **EP 3 044 640 B1**
(45) Date de publication et mention de la délivrance du brevet: **20.11.2019**
(21) Numéro de dépôt: 14766127.6
(22) Date de dépôt: 05.09.2014
(51) Int. Cl.: G05B 19/042, G05B 19/05, G06F 11/16, G06F 11/20

(54) **SYSTÈME D'AUTOMATISME**
AUTOMATIONSSYSTEM
AUTOMATION SYSTEM

(30) Priorité: 10.09.2013 FR 1358686
(43) Date de publication de la demande: 20.07.2016
(73) Titulaire: Schneider Electric Industries SAS, 92500 Rueil-Malmaison (FR)
(72) Inventeur: PAUCHET, Eric, 06300 Nice (FR); CHAPIER, Pascal, 06560 Valbonne (FR)
(74) Mandataire: Dufresne, Thierry
(86) Numéro de dépôt international: PCT/EP2014/068998
(87) Numéro de publication internationale: WO 2015/036338

(56) Documents cités:
- EP-A2- 0 262 923
- US-A- 4 521 871
- US-A- 4 672 537
- US-A- 4 959 768
- US-A- 5 313 386
- US-A- 5 464 435
- US-A- 5 966 301
- US-A1- 2003 115 500
- US-A1- 2013 131 839

## Description

### Domaine technique de l'invention

La présente invention se rapporte à un système d'automatisme comprenant plusieurs contrôleurs logiques programmables connectés sur un réseau de communication.

### Etat de la technique

De manière connue, un contrôleur logique programmable (désigné également PLC pour "Programmable Logic Controller" en anglais) est chargé d'exécuter sa propre application d'automatisme de manière à contrôler un ensemble de modules d'entrée/sortie. Le contrôleur logique programmable lit des données envoyées sur les modules d'entrée et écrit des données sur les modules de sortie. Les modules d'entrée sont par exemple raccordés à des capteurs et les modules de sortie sont par exemple raccordés à des actionneurs.

Un système d'automatisme peut comporter plusieurs contrôleurs logiques programmables, dits primaires, connectés entre eux sur un réseau de communication. Les ensembles de modules d'entrée/sortie commandés chacun par un contrôleur logique programmable distinct sont également connectés à ce réseau de communication.

Dans l'état de la technique, un contrôleur logique programmable de secours est associé à chaque contrôleur logique programmable primaire du réseau afin de pouvoir le suppléer en cas de mise hors service volontaire ou involontaire. La mise hors-service peut survenir pour différentes raisons telles que par exemple une défaillance, une coupure de l'alimentation électrique, une maintenance, un remplacement ou une mise à jour logicielle et/ou matérielle. Une fois en service, le contrôleur logique programmable de secours pilote l'ensemble de modules d'entrée/sortie associé au contrôleur logique programmable primaire qu'il remplace.

L'architecture d'automatisme est donc particulièrement lourde et coûteuse car elle nécessite de prévoir un contrôleur logique programmable de secours pour chaque contrôleur logique programmable primaire.

Une autre solution est décrite dans le document US4672537. Cette solution présente l'inconvénient que tous les modules du système multiprocesseurs sont en fonctionnement et que lorsque l'un d'eux tombe en panne, le système est amputé d'un module, diminuant alors ses performances.

DE4317729 A1 et US4521871 A montrent des systèmes de contrôleurs logiques programmables redondants, l'un étant actif, l'autre inactif. Une liaison entre les deux contrôleurs permet d'échanger des signaux indiquant lequel des deux est actif. En cas de défaillance du contrôleur actif, l'autre contrôleur est activé pour garantir la continuité des opérations.

Le but de l'invention est de proposer un système d'automatisme présentant une architecture simplifiée par rapport à l'état de la technique, moins coûteuse et facile à mettre en œuvre et permettant de maintenir le système dans la même configuration de fonctionnement et à un même niveau de performance.

### Exposé de l'invention

Ce but est atteint par un système d'automatisme réalisé à travers un réseau de communication et comportant au moins :
- un premier contrôleur logique programmable connecté audit réseau de communication et agencé pour exécuter une première application d'automatisme,
- un premier ensemble de modules d'entrée/sortie commandé par le premier contrôleur logique programmable à travers le réseau de communication,
- un deuxième contrôleur logique programmable connecté audit réseau de communication et agencé pour exécuter une deuxième application d'automatisme,
- un deuxième ensemble de modules d'entrée/sortie commandé par le deuxième contrôleur logique programmable à travers le réseau de communication,
- un troisième contrôleur logique programmable, dit de secours, connecté audit réseau de communication et agencé pour suppléer le premier contrôleur logique programmable ou le deuxième contrôleur logique programmable devenu hors service,
le contrôleur logique programmable de secours comportant des moyens de mémorisation stockant à la fois la première application d'automatisme et la deuxième application d'automatisme et étant agencé pour exécuter la première application d'automatisme en vue de suppléer le premier contrôleur logique programmable et de contrôler le premier ensemble de modules d'entrée/sortie, ou pour exécuter la deuxième application d'automatisme en vue de suppléer le deuxième contrôleur logique programmable et de contrôler le deuxième ensemble de modules d'entrée/sortie.

Par rapport à l'état de la technique, le système comporte un contrôleur logique programmable de secours, qui n'est activé que lorsque l'un des contrôleurs programmables primaires tombe en panne, permettant ainsi de s'assurer d'une solution fiable et fonctionnelle en cas de cas de panne de l'un de ces contrôleurs logiques programmables primaires. Le système conserve alors toujours le même nombre de contrôleurs logiques programmables actifs.

Par ailleurs, la solution de l'invention n'emploie qu'un seul contrôleur logique programmable de secours car celui-ci mémorise les applications d'automatisme de tous les autres contrôleurs logiques du système, lui permettant de suppléer n'importe lequel des contrôleurs logiques programmables primaires.

Selon une particularité, le premier contrôleur logique programmable et le deuxième contrôleur logique programmable sont connectés au contrôleur logique programmable de secours par une liaison de surveillance.

Selon une autre particularité, le contrôleur logique programmable de secours comporte des moyens de détection de la mise hors service du premier contrôleur logique programmable ou du deuxième contrôleur logique programmable.

Selon une autre particularité, le premier contrôleur logique programmable et le deuxième contrôleur logique programmable comportent chacun des moyens de génération d'une image représentative d'un état interne et sont agencés pour envoyer cet état au contrôleur logique programmable de secours à travers la liaison de surveillance.

Selon une autre particularité, le premier contrôleur logique programmable mémorise la première application d'automatisme et la deuxième application d'automatisme dans une mémoire de masse.

Selon une autre particularité, le deuxième contrôleur logique programmable mémorise la première application d'automatisme et la deuxième application d'automatisme dans une mémoire de masse.

### Brève description des figures

D'autres caractéristiques et avantages vont apparaître dans la description détaillée qui suit faite en regard des dessins annexés suivants :

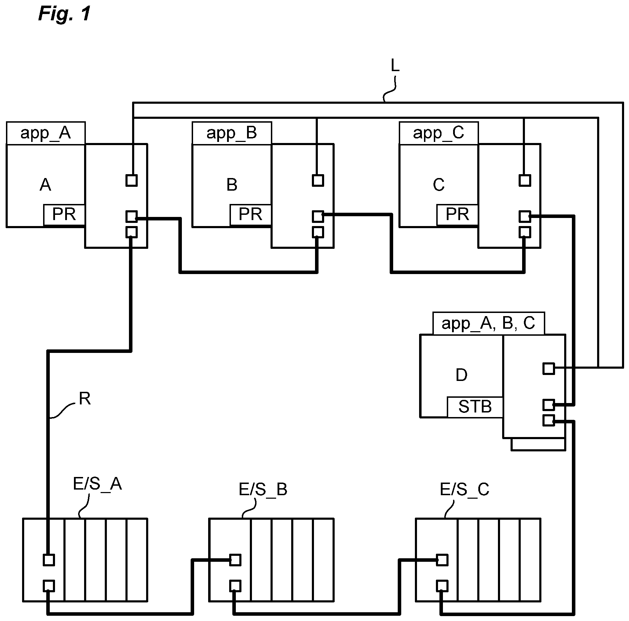

- Les figures 1, 2 et 3 représentent le système d'automatisme de l'invention et illustrent le principe de fonctionnement de ce système d'automatisme.

### Description détaillée d'au moins un mode de réalisation

L'invention concerne un système d'automatisme comprenant plusieurs contrôleurs logiques programmables A, B, C, dits primaires (désignés PR sur les dessins), interconnectés sur un réseau de communication R. A chaque contrôleur logique programmable primaire est associé un ensemble de modules d'entrée/sortie E/S_A, E/S_B, E/S_C. Les ensembles de modules d'entrée/sortie E/S_A, E/S_B, E/S_C sont préférentiellement déportés par rapport à leur contrôleur logique programmable A, B, C respectif et sont connectés au réseau de communication. Chaque contrôleur logique programmable A, B, C exécute une application d'automatisme particulière pour contrôler ses modules d'entrée/sortie. Chaque contrôleur logique programmable contrôle son ensemble de modules d'entrée/sortie à travers le réseau de communication R. Le système d'automatisme peut être câblé suivant une topologie en anneau ou en étoile. Dans la suite de la description et sur les figures, nous prendrons l'exemple d'une architecture réseau en anneau mais il faut comprendre que le principe de l'invention peut s'appliquer à une architecture réseau en étoile ou de tout autre type.

Sur la figure 1, nous considérons un système d'automatisme comportant trois contrôleurs logiques programmables A, B, C primaires, et trois ensembles de modules d'entrée/sortie E/S_A, E/S_B, E/S_C, chaque ensemble de modules d'entrée/sortie étant associé à un contrôleur logique programmable A, B, C distinct. Bien entendu, le nombre de contrôleurs choisi n'est pas limitatif et l'invention s'applique à tout système d'automatisme comportant plus de deux contrôleurs logiques programmables.

Le contrôleur logique programmable A exécute une première application d'automatisme app_A et pilote un premier ensemble de modules d'entrée/sortie E/S_A, le contrôleur logique programmable B exécute une deuxième application d'automatisme app_B et pilote un deuxième ensemble de modules d'entrée/sortie E/S_B et le contrôleur logique programmable C exécute une troisième application d'automatisme app_C et pilote un troisième ensemble de modules d'entrée/sortie E/S_C.

Selon l'invention, le système d'automatisme comporte également un contrôleur logique programmable D dit de secours (désigné STB sur les dessins). Ce contrôleur logique programmable D de secours est destiné à suppléer n'importe lequel des contrôleurs logiques programmables A, B ou C primaires si l'un d'eux est hors-service. Les causes de mise hors service peuvent être multiples. Il peut s'agir par exemple d'une coupure d'alimentation électrique, d'une défaillance, d'un arrêt pour mise à jour ou pour maintenance,... Le contrôleur logique programmable de secours est inactif tant que les contrôleurs logiques programmables primaires sont en état de fonctionnement. Il ne peut devenir actif que lorsque l'un des contrôleurs logiques programmables primaires tombe en panne. En remplaçant un contrôleur logique programmable primaire tombé en panne par le contrôleur logique programmable de secours, le système conserve toujours le même nombre de contrôleurs actifs.

Le contrôleur logique programmable D de secours est également connecté au réseau de communication R de manière à pouvoir communiquer avec les contrôleurs logiques programmables A, B, C primaires et les ensembles de modules d'entrée/sortie E/S_A, E/S_B, E/S_C du système. Par ailleurs, les contrôleurs logiques programmables A, B, C primaires sont également connectés au contrôleur logique programmable D de secours par une liaison de surveillance L, distincte du réseau de communication R.

Un premier type de signaux est échangé sur le réseau de communication R pour permettre à chaque contrôleur logique programmable A, B ou C primaire de communiquer avec son ensemble de modules d'entrée/sortie E/S_A, E/S_B, E/S_C. Un deuxième type de signaux est envoyé sur la liaison de surveillance L par chaque contrôleur logique programmable A, B, C primaire à destination du contrôleur logique programmable D de secours afin de l'informer en permanence de son état. A chaque cycle, le contrôleur logique programmable A, B, C primaire construit une image de son état interne et envoie cet état au contrôleur logique programmable de secours sur la liaison de surveillance L. Le contrôleur logique programmable D de secours mémorise les états reçus des différents contrôleurs logiques programmables A, B, C primaires.

Pour pouvoir suppléer n'importe lequel des contrôleurs logiques programmables A, B ou C primaires du système, le contrôleur logique programmable D de secours mémorise en permanence toutes les applications d'automatismes app_A, app_B, app_C exécutées par les contrôleurs logiques programmables A, B, C primaires du système. Les applications des contrôleurs logiques programmables A, B, C primaires sont mémorisées en mémoire RAM du contrôleur logique programmable D de secours afin d'être exécutables immédiatement dès la détection d'une mise hors-service d'un contrôleur logique programmable A, B ou, C primaire du réseau sur la liaison de surveillance L. Dès qu'il détecte une mise hors-service d'un contrôleur logique programmable A, B ou, C primaire, le contrôleur logique programmable D de secours sélectionne l'application du contrôleur logique programmable hors-service et l'exécute immédiatement en prenant le contrôle, à travers le réseau de communication, de l'ensemble de modules d'entrée/sortie associé au contrôleur logique programmable hors-service.

Le contrôleur logique programmable de secours est destiné à détecter les mises hors service des contrôleurs logiques programmables primaires du réseau. Un contrôleur logique programmable A, B ou C primaire est considéré comme hors-service lorsqu'il ne communique plus avec le contrôleur logique programmable D de secours, ni sur le réseau de communication R, ni sur la liaison de surveillance L.

Lorsque le contrôleur logique programmable D de secours détecte une mise hors-service d'un contrôleur logique programmable A, B ou C primaire, il sélectionne dans sa mémoire l'application de ce contrôleur logique programmable primaire et l'exécute. Il prend également le contrôle de l'ensemble de modules d'entrée/sortie du contrôleur logique programmable remplacé. L'application à exécuter est identifiée dans les trames échangées sur le réseau de communication et sur la liaison de surveillance.

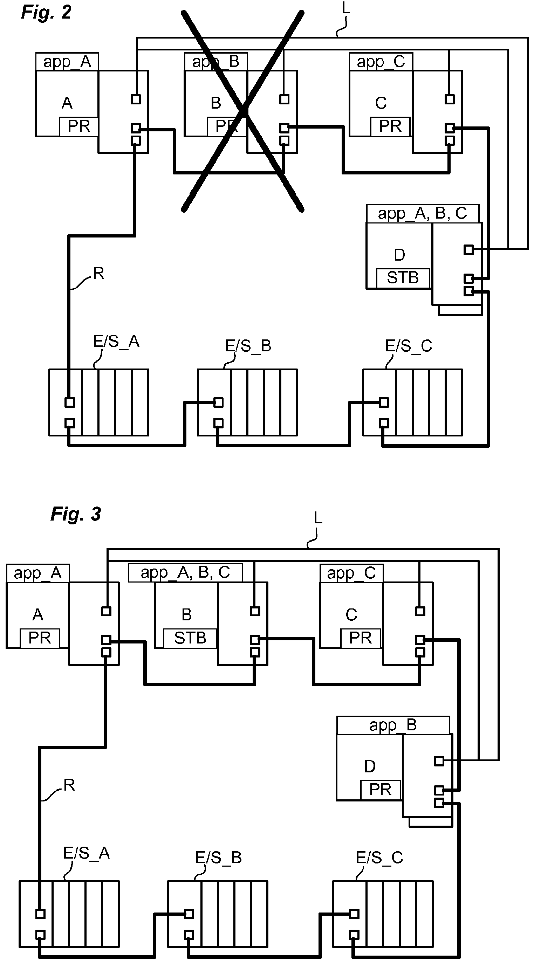

Une fois que le contrôleur logique programmable D de secours a remplacé le contrôleur logique programmable A, B ou C primaire hors-service, un nouveau contrôleur logique programmable doit devenir le contrôleur logique programmable de secours. Les contrôleurs logiques programmables primaires du système surveillent la mise en service du nouveau contrôleur logique programmable de secours afin de pouvoir lui envoyer leur état comme décrit précédemment sur la ligne de surveillance. Préférentiellement, une fois rétabli, il s'agit du contrôleur logique programmable (B sur la figure 2) qui était hors service qui devient le nouveau contrôleur logique programmable de secours pour tous les contrôleurs logiques programmables primaires du système. Préférentiellement, chaque contrôleur logique programmable du système mémorise dans une mémoire de masse (par exemple mémoire flash ou ROM) les applications d'automatisme de tous les contrôleurs logiques programmables du système, permettant ainsi à chaque contrôleur logique programmable de disposer de toutes les applications d'automatisme s'il est amené à devenir le contrôleur logique programmable de secours du système. En variante de réalisation, le nouveau contrôleur logique programmable de secours est par exemple amené à télécharger toutes les applications d'automatisme des contrôleurs logiques programmables primaires du système depuis un serveur distant.

Sur la figure 2, le contrôleur logique programmable B primaire tombe en panne. Le contrôleur logique programmable D de secours remplace le contrôleur logique programmable B primaire en panne et devient ainsi un contrôleur logique programmable primaire (PR). Il exécute ainsi l'application app_B déjà présente en mémoire RAM et prend le contrôle de l'ensemble de modules d'entrée/sortie E/S_B associé au contrôleur logique programmable B primaire. Sur la figure 3, le contrôleur logique programmable B primaire devient le nouveau contrôleur logique programmable de secours (STB) et dispose en mémoire, des applications app_A, app_B et app_C des contrôleurs logiques programmables du système.

## Revendications

1. Système d'automatisme réalisé à travers un réseau de communication (R) et comportant au moins :
- un premier contrôleur logique programmable (A) connecté audit réseau de communication et agencé pour exécuter une première application d'automatisme (app_A),
- un premier ensemble de modules d'entrée/sortie (E/S_A) commandé par le premier contrôleur logique programmable (A) à travers le réseau de communication (R),
- un deuxième contrôleur logique programmable (B) connecté audit réseau de communication (R) et agencé pour exécuter une deuxième application d'automatisme (app_B),
- un deuxième ensemble de modules d'entrée/sortie (E/S_B) commandé par le deuxième contrôleur logique programmable (B) à travers le réseau de communication (R),
**caractérisé en ce qu'**il comporte:
- un troisième contrôleur logique programmable (D), dit de secours, connecté audit réseau de communication (R) et agencé pour suppléer le premier contrôleur logique programmable (A) ou le deuxième contrôleur logique programmable (B) devenu hors service, et **en ce que**
- le contrôleur logique programmable (D) de secours comporte des moyens de mémorisation stockant la première application d'automatisme (app_A) et la deuxième application d'automatisme (app_B) et **en ce qu'**il est agencé pour rester inactif tant que le premier contrôleur logique programmable et le deuxième contrôleur programmable sont actifs et pour ne devenir actif et n' exécuter la première application d'automatisme (app_A) en vue de suppléer le premier contrôleur logique programmable (A) et de contrôler le premier ensemble de modules d'entrée/sortie (E/S_A) à travers ledit réseau de communication que lorsque ledit premier contrôleur logique programmable devient hors service ou pour n' exécuter la deuxième application d'automatisme (app_B) en vue de suppléer le deuxième contrôleur logique programmable (B) et de contrôler le deuxième ensemble de modules d'entrée/sortie (E/S_B) à travers ledit réseau de communication que lorsque ledit deuxième contrôleur logique programmable devient hors service.

2. Système selon la revendication 1, **caractérisé en ce que** le premier contrôleur logique programmable (A) et le deuxième contrôleur logique programmable (B) sont connectés au contrôleur logique programmable (D) de secours par une liaison de surveillance (L).

3. Système selon la revendication 2, **caractérisé en ce que** le contrôleur logique programmable (D) de secours comporte des moyens de détection de la mise hors service du premier contrôleur logique programmable (A) ou du deuxième contrôleur logique programmable (B).

4. Système selon la revendication 2, **caractérisé en ce que** le premier contrôleur logique programmable (A) et le deuxième contrôleur logique programmable (B) comportent chacun des moyens de génération d'une image représentative d'un état interne et **en ce qu'**ils sont agencés pour envoyer cet état au contrôleur logique programmable (D) de secours à travers la liaison de surveillance (L).

5. Système selon la revendication 1 ou 2, **caractérisé en ce que** le premier contrôleur logique programmable (A) mémorise la première application d'automatisme (app_A) et la deuxième application d'automatisme (app_B) dans une mémoire de masse.

6. Système selon la revendication 1 ou 2, **caractérisé en ce que** le deuxième contrôleur logique programmable (B) mémorise la première application d'automatisme (app_A) et la deuxième application d'automatisme (app_B) dans une mémoire de masse.

## Patentansprüche

1. Automatisierungssystem, welches über ein Kommunikationsnetz (R) realisiert ist und wenigstens aufweist:
- eine erste speicherprogrammierbare Steuerung (A), die mit dem Kommunikationsnetz verbunden ist und dafür ausgelegt ist, eine erste Automatisierungsanwendung (app_A) auszuführen,
- eine erste Anordnung von Eingangs-/Ausgangsmodulen (E/S_A), die von der ersten speicherprogrammierbaren Steuerung (A) über das Kommunikationsnetz (R) gesteuert wird,
- eine zweite speicherprogrammierbare Steuerung (B), die mit dem Kommunikationsnetz (R) verbunden ist und dafür ausgelegt ist, eine zweite Automatisierungsanwendung (app_B) auszuführen,
- eine zweite Anordnung von Eingangs-/Ausgangsmodulen (E/S_B), die von der zweiten speicherprogrammierbaren Steuerung (B) über das Kommunikationsnetz (R) gesteuert wird,
**dadurch gekennzeichnet, dass** es aufweist:
- eine dritte speicherprogrammierbare Steuerung (D), Notsteuerung genannt, die mit dem Kommunikationsnetz (R) verbunden ist und dafür ausgelegt ist, die erste speicherprogrammierbare Steuerung (A) oder die zweite speicherprogrammierbare Steuerung (B), welche ausgefallen ist, zu ersetzen, und dadurch, dass
- die speicherprogrammierbare Notsteuerung (D) Speichermittel aufweist, welche die erste Automatisierungsanwendung (app_A) und die zweite Automatisierungsanwendung (app_B) speichern, und dadurch, dass sie dafür ausgelegt ist, inaktiv zu bleiben, solange die erste speicherprogrammierbare Steuerung und die zweite speicherprogrammierbare Steuerung aktiv sind, und erst aktiv zu werden und die erste Automatisierungsanwendung (app_A) auszuführen, um die erste speicherprogrammierbare Steuerung (A) zu ersetzen und die erste Anordnung von Eingangs-/Ausgangsmodulen (E/S_A) über das Kommunikationsnetz zu steuern, wenn die erste speicherprogrammierbare Steuerung außer Betrieb geht, oder die zweite Automatisierungsanwendung (app_B) auszuführen, um die zweite speicherprogrammierbare Steuerung (B) zu ersetzen und die zweite Anordnung von Eingangs-/Ausgangsmodulen (E/S_B) über das Kommunikationsnetz zu steuern, wenn die zweite speicherprogrammierbare Steuerung außer Betrieb geht.

2. System nach Anspruch 1, **dadurch gekennzeichnet, dass** die erste speicherprogrammierbare Steuerung (A) und die zweite speicherprogrammierbare Steuerung (B) mit der speicherprogrammierbaren Notsteuerung (D) durch eine Überwachungsverbindung (L) verbunden sind.

3. System nach Anspruch 2, **dadurch gekennzeichnet, dass** die speicherprogrammierbare Notsteuerung (D) Mittel zur Erkennung der Außerbetriebsetzung der ersten speicherprogrammierbaren Steuerung (A) oder der zweiten speicherprogrammierbaren Steuerung (B) aufweist.

4. System nach Anspruch 2, **dadurch gekennzeichnet, dass** die erste speicherprogrammierbare Steuerung (A) und die zweite speicherprogrammierbare Steuerung (B) jeweils Mittel zur Erzeugung eines Bildes aufweisen, das für einen inneren Zustand repräsentativ ist, und dadurch, dass sie dafür ausgelegt sind, diesen Zustand über die Überwachungsverbindung (L) an die speicherprogrammierbare Notsteuerung (D) zu senden.

5. System nach Anspruch 1 oder 2, **dadurch gekennzeichnet, dass** die erste speicherprogrammierbare Steuerung (A) die erste Automatisierungsanwendung (app_A) und die zweite Automatisierungsanwendung (app_B) in einem Massenspeicher speichert.

6. System nach Anspruch 1 oder 2, **dadurch gekennzeichnet, dass** die zweite speicherprogrammierbare Steuerung (B) die erste Automatisierungsanwendung (app_A) und die zweite Automatisierungsanwendung (app_B) in einem Massenspeicher speichert.

## Claims

1. An automation system implemented through a communication network (R) and comprising at least:
- a first programmable logic controller (A) connected to said communication network and designed to execute a first automation application (app_A),
- a first set of input/output modules (E/S_A) controlled by the first programmable logic controller (A) through the communication network (R),
- a second programmable logic controller (B) connected to said communication network (R) and designed to execute a second automation application (app_B),
- a second set of input/output modules (E/S_B) controlled by the second programmable logic controller (B) through the communication network (R),
**characterized in that** it comprises:
- a third programmable logic controller (D), called backup programmable logic controller, connected to said communication network (R) and designed to stand in for the first programmable logic controller (A) or the second programmable logic controller (B) when taken out of service, and **in that**
- the backup programmable logic controller (D) comprises storage means storing both the first automation application (app_A) and the second automation application (app_B), and is designed to remain inactive as long as the first programmable logic controller and the second programmable logic controller are active, and to become active and execute the first automation application (app_A) for the purpose of standing in for the first programmable logic controller (A) and controlling the first set of input/output modules (E/S_A) through said communication network only when said first programmable logic controller is taken out of service, or to execute the second automation application (app_B) for the purpose of standing in for the second programmable logic controller (B) and controlling the second set of input/output modules (E/S_B) through said communication network only when said second programmable logic controller is taken out of service.

2. The system as claimed in claim 1, **characterized in that** the first programmable logic controller (A) and the second programmable logic controller (B) are connected to the backup programmable logic controller (D) by a monitoring link (L).

3. The system as claimed in claim 2, **characterized in that** the backup programmable logic controller (D) comprises means for detecting the taking out of service of the first programmable logic controller (A) or of the second programmable logic controller (B).

4. The system as claimed in claim 2, **characterized in that** the first programmable logic controller (A) and the second programmable logic controller (B) each comprise means for generating an image representative of an internal state and **in that** they are designed to send this state to the backup programmable logic controller (D) through the monitoring link (L).

5. The system as claimed in claim 1 or 2, **characterized in that** the first programmable logic controller (A) stores the first automation application (app_A) and the second automation application (app_B) in a mass memory.

6. The system as claimed in claim 1 or 2, **characterized in that** the second programmable logic controller (B) stores the first automation application (app_A) and the second automation application (app_B) in a mass memory.
